# EUROPEAN PATENT APPLICATION

(11) **EP 1 383 054 A1**
(43) Date of publication of application: **21.01.2004**
(21) Application number: 02291843.7
(22) Date of filing: 19.07.2002
(51) Int. Cl.: G06F 17/30

(54) **Data synchronization procedures for smartcards**

(71) Applicant: SCHLUMBERGER Systèmes, 92120 Montrouge (FR)
(72) Inventor: Abellan Sevilla, Jorge, 75014 Paris (FR)

(57) **Abstract**

The invention deals with a method for synchronizing data stored in two different databases of the same nature, one database being stored in a removable device (CARD) and the other being stored in a system (D1 and/or D2) communicating with said removable device, characterized in that the method comprises the following steps:
- a synchronization object is affected to a database after each synchronization of data, the synchronization object defining the last synchronization which has been performed;
- and, for performing a synchronization of said two databases, a program external to the removable device compares this synchronization object with the synchronization object affected to the other database to be synchronized, and function of this result, synchronizes data in the databases.

## Description

### 1 What is the field of the invention?

The invention deals with data synchronization.

Data synchronization is the act of establishing an equivalence between two data collections, where each data element in one item maps to a data item in the other, and their data is equivalent.

This invention particularly applies to removable device such as smartcard.

Generally speaking, when data to be synchronized is owned by the smartcard, some problems, described in paragraph 3, have to be solved.

### 2 What is already known?

### Synchronization basics

- Synchronization protocols are used to synchronize the content of a database owned by a device (client) with the content of another database owned by another device (server).
- Both devices can be connected and can exchange messages (synchronization messages) using different transfer/session protocols (e.g. HTTP, WSP...)
- The synchronization principles are basically the following:

Client and server devices arrange some initial synchronization parameters ( e.g. which databases are going to be synchronized, type of synchronization...)

One of them (device 1) sends the changes (additions, modifications... ) occurred since the last time their databases were synchronized between them (Hereafter referred as ChangeLog).

The other device (device 2) processes the changeLog received (modifying its database if required), and send its own changLog to the device 1.

Following the changeLog received, device 1 changes its database if required.

Both devices exchange acknowledges and other finalization messages if required, ending the synchronization process.

### 3 What problem needs to be solved?

Two important facts must be considered when trying to define a smartcard synchronization solution:
- The smartcard is a removable device that can be inserted into different terminals
- The content of the smartcard can be accessed and modified by different entities (by APDU commands from the terminal, by Over The Air (OTA) commands, etc...)

These two facts have a clear initial consequence: for synchronization purposes, the smartcard cannot be managed as a simple memory accessed by the terminal: its memory is not attached or controlled by a unique device.

So, the smartcard must provide methods to manage its modifications, and interfaces to access to these methods whatever the entity accessing to the smartcard is. In easier words, the smartcard shall perform some required actions to be integrated in a synchronization process.

In the other hand, due to the lack of resources (memory, processing or communication capabilities) the smartcard is not able to support a complete synchronization protocol, mainly characterized in supporting an appropriated error handling and having a satisfactory transport and data type independence (e.g. support direct synchronization between devices connected by local area networks)

The main consequence to be extracted is that the smartcard is not able to support a complete synchronization protocol but it must perform tasks relating modification detection and synchronization object managing. A synchronization object defines uniquely the last time that a device X has been synchronized with its database Y. An example of synchronization object, defining a timestamp can be the next (time-day-month-year, X, Y).

This enables the smartcard content to be used as the data source to be synchronized in a synchronization process managed by a device having access to the smartcard.

Another aspect must be also considered. Devices using a smartcard use to have a copy of the smartcard memory saved in their local memory. To minimize the data transfer, the synchronization process should enable the use of the data copied in the device local memory in spite of having to transfer the data from the smartcard again.

### 4 How is the problem solved?

The smartcard will support synchronization object managing and modification detection. The device having access to the smartcard will have three new commands to get and exploit the information related to synchronization objects and modification detection.

Synchronization objects will be linked to a database (Remember: A database can be a file, a table...). They will represent a specific state of the database after a successful synchronization with a specific device.

The smartcard will be able to detect the modifications of a specific database since any of the synchronization objects linked to this database. The three new commands are:
NewSync: The device (D1) informs to the smartcard that a new synchronization of the data of one of its database (DB1) with another device (D2) is to be performed. The smartcard answers with the identifier of the synchronization object, if exists, defining the last time that this database has been synchronized with the device (synchronization object is referred as "last synchronization object"). It also proposes a new synchronization object defining the state of the database after the current synchronization ("new synchronization object").
GetChanges: The device (D1) asks for the modifications of the database occurred since the last synchronization object. The smartcard (CARD) answers with the identifiers of the database items modified, added or deleted.
Note: Only the identifiers are returned. So, if required, the device could make use of its local copy of the smartcard memory to follow with the synchronization protocol.
StoreSync: The device (D1) informs the smartcard that the synchronization has been performed. (Changes may have occurred in the smartcard following the synchronization protocol managed by the device).
   The smartcard will replace the last synchronization object by the new one, and will be henceforth able to detect further modifications in the database.
   With these three commands, the smartcard will provide the minimal set of actions required to perform a synchronization of data stored in the smartcard, considering the problems and restrictions defined before.

### 5 Detailed description of a practical example

A Mobile, under user request, wants to synchronize data with for example a PDA (personal Digital Assistant) both connected by the infrared port.

In our example, a database is a file.

The data to be synchronized is the user's phonebook contained in a file EF of the user's SIM. The Mobile equipment is able to interrogate the smartcard using APDU messages over the standard T=0 protocol.

Before starting the synchronization protocol, the mobile sends to the smartcard the NewSync command with the identifier of the PDA and the name of the file to be synchronized. The smartcard remembers that an ancient synchronization with the same PDA has been performed some time ago, with a synchronization synchronization object named "04012002131412". It sends back the last synchronization object identifier and proposes a new synchronization object identifier "05022002131412".

The mobile is able to initiate a synchronization with the PDA by the corresponding exchange of initialization messages.

The last synchronization object provided by the smartcard can be used in the synchronization protocol to be compared with the last synchronization object stored in the PDA:
- If synchronization objects do not match (or any of them does not exist), a full synchronization is requested by the synchronization protocol. It means that both devices must exchange all the data (of the ADN file). In this case no usage of modification register is needed. All the database content is supposed to have been modified (added).
- If the two last synchronization objects match it means that a successful synchronization was performed in the past, and that both devices may exchange only modifications occurred since that synchronization.

The mobile equipment may interrogate the smartcard to know about the changes occurred since the moment when the last object was set. It sends a GetChanges command, and the smartcard answers with the list of the modifications (e.g. "Added record 1 and 2, modified record 4, deleted record 7"). The mobile equipment may then perform following commands to know what has been the result of the modifications. For instance, it can read the record 4 to see its value (maybe not if it has it in a local copy).

Once it has all data need it can continue the synchronization protocol sending the following messages with the client modifications and eventually receiving and performing the server modifications.

Once the synchronization protocol is finished, the mobile shall send a StoreSync command to the smartcard, to set the new synchronization object. Once this command is performed the smartcard will be able to detect changes henceforward performed.

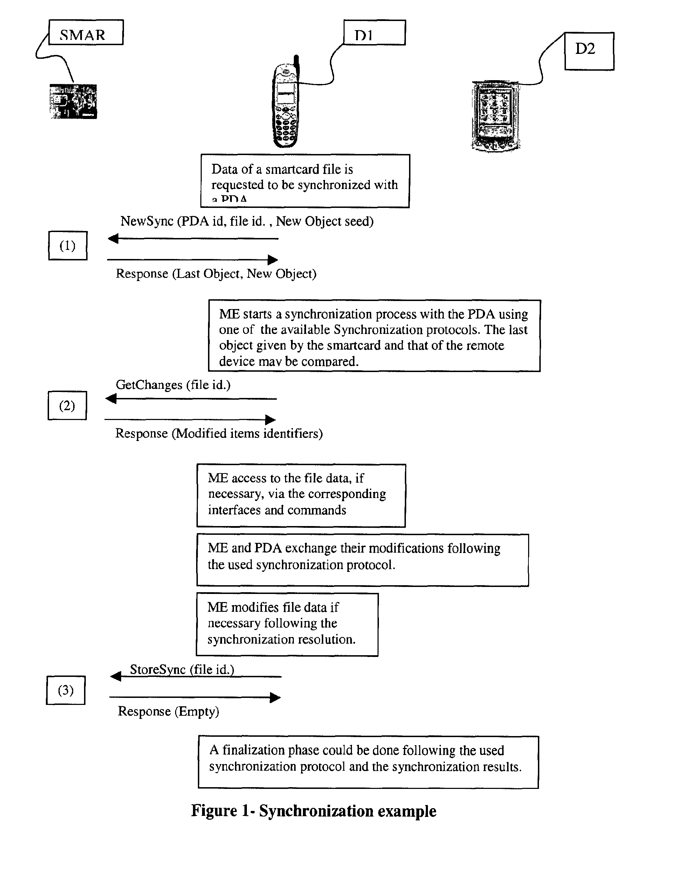

An example is illustrated in figure 1.

### Step 1

The smartcard remembers that an ancient synchronization with the same PDA has been performed some time ago, with a synchronization object named "04012002131412". It sends back the last synchronization object identifier and proposes a new synchronization object identifier "05022002131412".

### Step 2

The smartcard answers with the list of the file modifications (e.g. "Added record 1 and 2, modified record 4, deleted record 7"), occurred after the last synchronization event. (defined by the last synchronization object).

This step shall be skipped if no last synchronization object was present or if server and client synchronization objects do not match. (cases of full synchronization)

### Step 3

The smartcard stores the active synchronization object as the last synchronization object for future synchronization with the same PDA. Hereafter, the smartcard will be able to detect changes performed after this moment following commands in future synchronization.

### Some additional comments:

- If we change the smartcard into another device and we try to synchronize again with the same PDA, it will work (change detection and synchronization objects management are independent from the terminal).
- Synchronization of both devices can be performed in any protocol supported by them. (The 3 commands included in the synchronization procedure does not force any specific requirement to the synchronization protocol).
- The mobile can be substituted by any other device having access to the smartcard and to the 3 synchronization commands defined. ( e.g. OTA server).
- The methods defined can also be used to synchronize smartcard data with the local copy of the smartcard data in the mobile equipment (local synchronization between the smartcard and the mobile equipment).

### Definitions

Database: a data container (table, file...). No presumptions about its structure are needed.
Data Item: a specific data of a database. (e.g. a record of a file, a row of a table,...)
APDU: Application Protocol Data Unit
HTTP: HyperText Transfer Protocol
WSP: Wireless Session Protocol
ME: Mobile Equipment

## Claims

1. Method for synchronizing data stored in two different databases of the same nature, one database being stored in a removable device (CARD) and the other being stored in a system (D1 and/or D2) communicating with said removable device, **characterized in that** the method comprises the following steps:
- a synchronization object is affected to a database after each synchronization of data, the synchronization object defining the last synchronization which has been performed;
- and, for performing a synchronization of said two databases, a program external to the removable device compares this synchronization object with the synchronization object affected to the other database to be synchronized, and function of this result, synchronizes data in the databases.

2. Method according to claim 1, **characterized in that** after the device (D1) has informed to the removable device that a new synchronization of the data of one of its database with another device (D2) is to be performed, the removable device (CARD) answers with the synchronization object, if exists, defining the last time that this database has been synchronized with the device, and proposes a new synchronization object defining the state of the database after the current synchronization.

3. Method according to claims 1 or 2, wherein the device (D1) asks for the modifications of the database occurred since the last synchronization object, and the removable device answers with the identifiers of the database items modified, added or deleted.

4. Method according to claim 3, **characterized in that** only the identifiers of the data base items are returned, the device (D1) being able to make use of its local copy of the removable device memory to obtain the database content and to follow with the data synchronization process.

5. Method according to claims 1 or 3, wherein the device (D1) informs the removable device that the synchronization has been performed, the removable device replacing the last synchronization object by the new one being able to detect further modifications in the database.

6. Method according to claim 1, **characterized in that** a command is sent to the removable device with the identifier of the device and the name of the database to be synchronized.

7. Method according to claim 1, **characterized in that**,
- if the synchronization objects do not match (or any of them does not exist), a full synchronization is requested meaning that both devices must exchange all the data;
- if the two last synchronization objects match, it means that both devices may exchange only modifications occurred since that synchronization.

8. Removable device being able to communicate with a communication system, said removable device and the communication system storing at least one database of the same nature, **characterized in that** a synchronization object is affected to a database at each synchronization of data, the synchronization object defining the last synchronization which has been performed and being used to verify if databases in the removable device have been synchronized with other databases stored in a communication system.
